Europäisches Patentamt

European Patent Office

Office européen des brevets

(19)

(11) Numéro de publication: **0 128 824**
**A1**

(12) # DEMANDE DE BREVET EUROPEEN

(21) Numéro de dépôt: **84401157.7**

(22) Date de dépôt: **06.06.84**

(51) Int. Cl.³: **G 01 D 5/22**

(30) Priorité: **08.06.83 FR 8309489**

(43) Date de publication de la demande: **19.12.84**
**Bulletin 84/51**

(84) Etats contractants désignés: **CH DE GB IT LI SE**

(71) Demandeur: **PETERCEM S.A., 61, Route de Grenoble
B.P. 320, F-69808 Saint Priest-Cédex (FR)**

(72) Inventeur: **Macovschi, Mihaîl, 133, Cours Albert Thomas,
F-69003 Lyon (FR)**

(74) Mandataire: **Laget, Jean-Loup, Cabinet Pierre
Loyer 18, Rue de Mogador, F-75009 Paris (FR)**

(54) **Procédé de contrôle de la position d'une cible à l'intérieur d'une enveloppe à parois épaisses, et appareil correspondant.**

(57) Un circuit électronique est séparé par une ligne à quatre fils d'un capteur (5) constitué d'un transformateur à couplage variable asymétrique, à deux secondaires (22, 23) en phase, le primaire (21) étant alimenté en courant triangulaire, et la cible magnétique étant suffisamment longue pour qu'une partie en soit toujours dans le capteur (5).

EP 0 128 824 A1

- 1 -

Procédé de contrôle de la position d'une cible à l'intérieur d'une
enveloppe à parois épaisses, et appareil correspondant.

L'invention concerne un procédé de contrôle de la position
d'une cible à l'intérieur d'une enveloppe à parois épaisses,
et l'appareil correspondant.

Le problème du contrôle de la position d'une pièce métallique, ou cible, dans une enveloppe à parois épaisses, se rencontre en particulier pour la surveillance du niveau de liquides corrosifs ou dangereux, ou placés dans des enceintes
soumises à des températures ou à des pressions élevées. Il se
rencontre également pour la surveillance de l'état d'un clapet par exemple, placé dans une enceinte soumise à des températures ou à des pressions élevées.

Dans de tels cas, un flotteur ou un clapet porte une tige au
bout de laquelle est placée une cible qui se déplace dans un
tube, par exemple, à parois épaisses et non transparentes.

Pour contrôler la position de cette cible dans une zone définie, il est connu d'utiliser un transformateur différentiel
linéaire à couplage variable, défini usuellement par les initiales LVDT. Un tel transformateur comporte un primaire et
deux secondaires montés en opposition. La cible est alors un
petit noyau magnétique dont la hauteur est plus petite que
celle du bobinage. Lorsque la cible se déplace à l'intérieur
du bobinage, on peut ainsi contrôler sa position avec une
bonne linéarité. Mais si la cible sort du bobinage, on a une information qui ne correspond plus à la position de la cible. Il faut donc soit que la cible ne se déplace qu'à l'intérieur du bobinage, soit que le bobinage soit plus long que la course de la cible.

Un autre inconvénient de ce système connu est qu'il fonctionne en signal sinusoïdal, de courant ou de tension. Il en résulte des déphasages entre le primaire et les secondaires du transformateur, ce qui entraîne des difficultés pour comparer les amplitudes des signaux primaire et secondaires.

Par ailleurs, ce transformateur fonctionnant avec une fréquence supérieure à 1 kHz, les pertes par courant de Foucault dans les parois épaisses sont très importantes.

Un but de la présente invention est de proposer un système de contrôle de la position d'une cible qui ne présente pas les inconvénients du transformateur de type LVDT connu, c'est-à-dire qui soit affranchi des déphasages, et dans une large mesure des pertes par courant de Foucault, dont la zone de contrôle ne soit pas limitée à la longueur du bobinage, et dont le capteur proprement dit puisse être disposé loin d'un circuit électronique d'alimentation et d'exploitation sans qu'il en résulte une plus grande sensibilité aux parasites.

Un autre but de l'invention est d'assurer avec le même capteur la détection de deux positions différentes dont l'une.est déterminée avec précision.

La présente invention a pour objet un procédé de contrôle de la position d'une cible à l'intérieur d'une enveloppe à parois épaisses, caractérisé en ce qu'on utilise comme capteur un transformateur à couplage variable asymétrique, à deux secondaires en phase ; et en ce que l'on définit à distance du capteur et par voie électronique la différence entre les signaux des deux secondaires.

Selon d'autres caractéristiques de l'invention :

- on utilise comme signal d'excitation du capteur un courant triangulaire, et on procède aux mesures par échantillonnage en fin de demi-période de courant d'excitation ;

- le signal analogique de différence entre les signaux des deux secondaires est comparé à des valeurs de seuil dans des comparateurs dont l'état de sortie est représentatif de la position de la cible ;

- on utilise une cible magnétique suffisamment longue pour qu'une partie en soit toujours dans le capteur.

L'invention a également pour objet un appareil de contrôle de la position d'une cible à l'intérieur d'une enveloppe à parois épaisses, caractérisé en ce qu'il comporte : un capteur constitué d'un transformateur à couplage variable asymétrique, à deux secondaires en phase, et un circuit électronique, séparés par une ligne à quatre fils, un fil de masse, un fil d'alimentation en courant du primaire du transformateur et deux fils de transmission des signaux de sortie des deux secondaires.

Selon d'autres caractéristiques de l'invention :

- le circuit électronique comprend un amplificateur différentiel à haute impédance d'entrée, élaborant le signal différence entre les signaux en provenance des deux secondaires, un générateur de tensions de seuil, et des comparateurs comparant le signal différence auxdites tensions de seuil ;

- des circuits anti-rebonds sont prévus pour transmettre, après échantillonnage, l'état de sortie des comparateurs;

- pour l'alimentation du capteur en courant, le circuit électronique comporte un oscillateur, une horloge, un convertisseur de signaux carrés en signaux triangulaires, et un convertisseur tension-intensité ;

- le capteur comporte un primaire, un secondaire de référence

- 4 -

et un secondaire de mesure, le primaire et le secondaire de
référence étant bobinés l'un sur l'autre ;

- le secondaire de mesure est plus long que le primaire et
le secondaire de référence.

D'autres caractéristiques de l'invention ressortent de la
description qui suit faite avec référence au dessin annexé
dans lequel on peut voir :

- Figure 1 - un schéma symbolique simplifié d'un exemple de
réalisation d'un appareil de contrôle de position d'une cible
selon l'invention ;

- Figure 2 - un schéma électrique simplifié du capteur proprement dit de l'appareil de la figure 1 ;

- Figure 3 - une représentation de quelques signaux électriques en différents points du schéma de la figure 1 ;

- Figure 4 - un mode particulier de réalisation du capteur
de la figure 2.

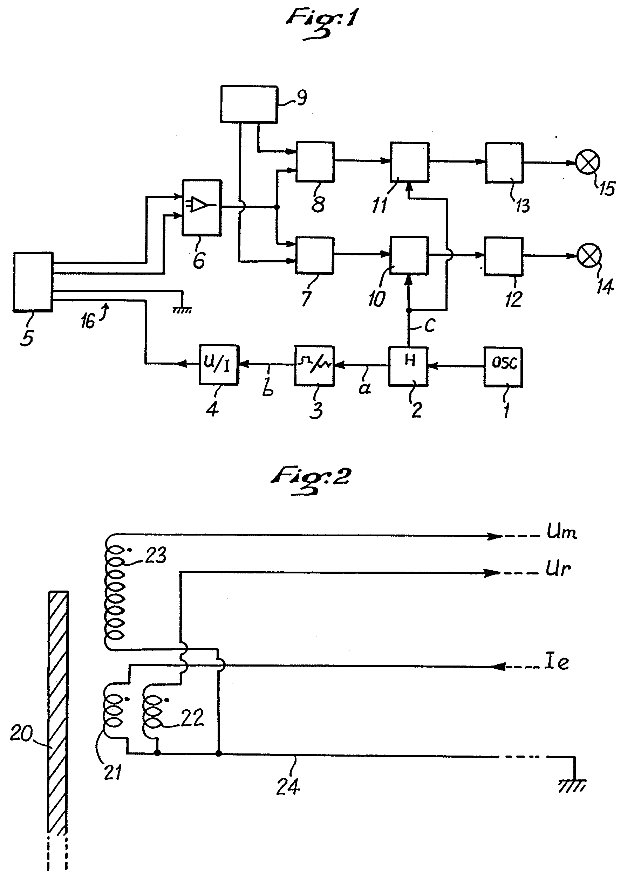

En se reportant au dessin, on peut voir que l'appareil de
contrôle de la position d'une cible à l'intérieur d'une enveloppe à parois épaisses se compose d'un capteur et d'un
circuit électronique. Le capteur 5 de la figure 1 est représenté en détail sur la figure 2. Il est constitué d'un transformateur à couplage variable asymétrique, comprenant un enroulement primaire 21, un premier enroulement secondaire 22
de référence, et un deuxième enroulement secondaire 23 de
mesure. Ces trois enroulements ont un conducteur commun de
masse 24. Les deux secondaires 22 et 23 ne sont pas montés en
opposition, mais dans le même sens de façon que leurs signaux
soient en phase. Le primaire 21 est alimenté en courant d'excitation Ie, le secondaire 22 de référence délivre une tension
de référence Ur, et le secondaire 23 de mesure délivre une
tension de mesure Um. Devant le bobinage, est représentée la
cible 20.

0128824

- 5 -

En revenant à la figure 1, on voit qu'entre le capteur 5 et
le circuit électronique, il y a une ligne symbolisée en 16,
à quatre fils, qui peut faire plusieurs centaines de mètres.
Le circuit électronique pour sa part, comporte : un oscillateur 1 stable ; une horloge 2; un convertisseur 3 de signaux
carrés en signaux triangulaires, avec réglage automatique de
la symétrie par rapport au zéro ; un convertisseur 4 tension/
courant pour alimenter le primaire 21 en courant triangulaire;
un amplificateur différentiel 6 à haute impédance d'entrée,
recevant les deux signaux des deux secondaires 22 et 23 respectivement ; deux comparateurs 7 et 8; un générateur 9 de
tensions de référence pour la définition des seuils de détection; des circuits anti-rebonds 10, 11, ayant pour rôle d'éliminer les parasites ; deux circuits de sortie 12 et 13 avec
les dispositifs correspondants d'affichage ou de signalisation 14 et 15, respectivement.

L'oscillateur 1 fournit un signal de fréquence stable. L'horloge 2 procède par divisions de fréquence, et transforme les
signaux de l'oscillateur 1 en signaux carrés (ligne a, Figure
3) de très basse fréquence (5 à 100 Hz) pour permettre la détection de la cible à travers des parois épaisses en minimisant
l'influence des courants de Foucault. Le convertisseur 3 transforme ces signaux carrés en signaux triangulaires (ligne b,

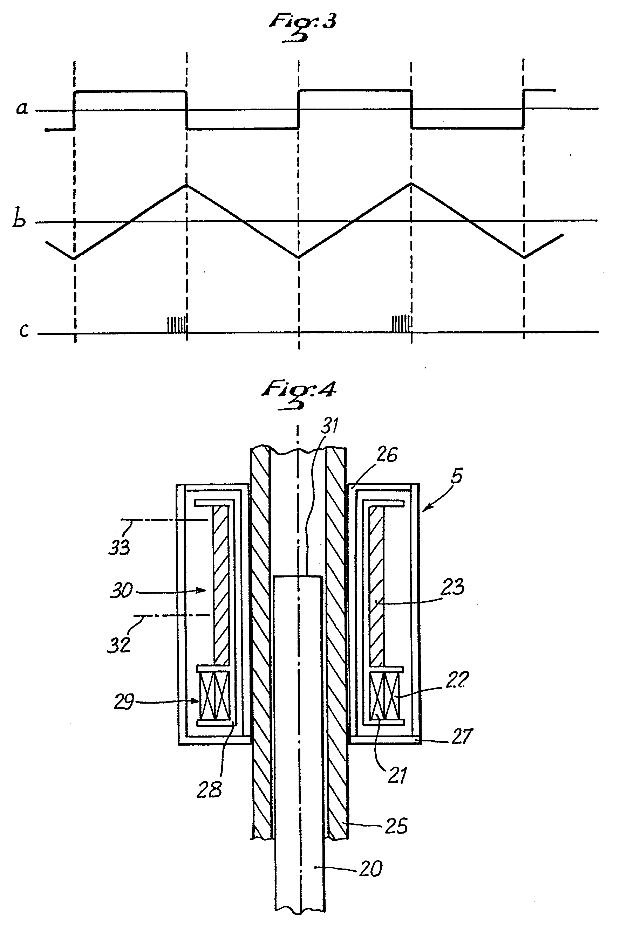

figure 3). Ces signaux triangulaires sont réglés automatiquement pour être symétriques par rapport au zéro. Le convertisseur tension/courant 4 permet d'alimenter le primaire 21 du
transformateur à couplage variable en courant dont la dérivée
par rapport au temps est constante pendant chaque demi-période.

Théoriquement, la force électro-motrice induite dans chacun
des secondaires 22 et 23, pendant chaque demi-période du courant triangulaire d'excitation, est constante. En pratique, à
chaque inversion de la pente du courant dans le primaire, il
y a un phénomène transitoire; Cependant, dès que le phénomène
transitoire est terminé, la tension dans un secondaire peut

0128824

- 6 -

être considérée comme constante.

Si l'on se place vers la fin de la demi-période correspondante, on peut alors faire plusieurs mesures successives, par échantillonnage, pendant que la tension est constante, de façon à ne transmettre un résultat de mesure qu'après confirmation de ce résultat par plusieurs mesures successives. On peut ainsi s'affranchir de l'influence des parasites.

En effet, un parasite se matérialise en général par un signal de tension instantané, qui peut fausser une mesure mais pas les autres mesures voisines. On peut ainsi prendre par exemple la moyenne des échantillons de mesure pour faire pratiquement disparaître l'influence d'un parasite. Avec les circuits anti-rebonds 10 et 11, on peut procéder d'une manière un peu différente en ne laissant sortir le signal vers les circuits de sortie 12, 13 que si le signal à l'entrée des circuits 10 et 11, respectivement, est resté constant un certain nombre de fois pour chacun des deux circuits 10 et 11. Les échantillonnages sont assurés au moyen des signaux d'horloge émis à fréquence élevée par l'horloge 2, et synchronisés avec les signaux d'excitation, comme représenté à la ligne c(figure 3). Selon l'invention, les circuits anti-rebonds assurent le filtrage des parasites et une certaine hystéréris. Le système est très peu sensible aux parasites bien qu'on opère en très basses fréquences, car on a de multiples échantillons au cours d'une demie alternance du courant triangulaire d'excitation du transformateur.

Sur la figure 4, on a représenté un mode particulier de réalisation du capteur 5, selon l'invention. La cible 20 en matériau magnétique se déplace dans un tube 25 en acier inox amagnétique de grande épaisseur. Autour de ce tube est disposée une gaîne 26 en matériau amagnétique (acier inox) consistant en une partie cylindrique appliquée sur le tube 25, et un disque supérieur.

Pour constituer avec la gaîne 26 un boîtier torique on a

0128824

- 7 -

prévu une gaîne extérieure 27 constituée d'une partie extérieure cylindrique et d'un disque inférieur. Cette gaîne extérieure 27 est en matériau magnétique.

A l'intérieur du boîtier ainsi constitué, est disposée une
carcasse 28 de support des enroulements primaire et secondaires du transformateur. Cette carcasse 28 est de préférence
réalisée en matière plastique si l'appareil travaille à basse
température, ou en céramique par exemple, s'il travaille à
température élevée.

Cette carcasse comprend un premier compartiment 29, relativement court, destiné à recevoir l'enroulement primaire 21 et
l'enroulement secondaire de référence 22, et un second compartiment 30 nettement plus allongé que le premier, destiné
à recevoir l'enroulement secondaire de mesure 23.

La cible magnétique 20 est susceptible de se déplacer verticalement. Sa face supérieure 31 doit normalement se trouver au-
dessus de la ligne de séparation des compartiments 29 et 30
et elle peut sortir du volume défini par le capteur 5, vers
le haut.

Le compartiment 29 des enroulements primaire 21 et secondaire
de référence 22 se trouve en bas par rapport au compartiment
30, dans l'exemple de réalisation représenté.

Selon l'invention, la cible magnétique 20 est suffisamment
longue pour que, quelle que soit la position qu'elle doit
prendre, une partie de cette cible soit logée dans le volume
défini par le compartiment 29.

La cible 20 est liée à un organe déplaçable, tel que le flotteur, clapet, ou autre, et se déplace avec lui. La position
normale de repos ou de fermeture de cet organe correspond à
une position de la face supérieure 31 de la cible 20 en
regard du niveau symbolisé en 32 (Figure 4), et correspondant à une longueur d'enroulement secondaire de mesure 23 sensiblement égale à la longueur de l'enroulement secondaire de référence 22. Pour cette position, les signaux Um et Ur transmis par les deux secondaires 23 et 22 respectivement, sont sensiblement égaux. La position normale d'ouverture de l'organe lié à la cible 20 correspond au niveau 33 de la face supérieure 31 de la cible, ce niveau étant compris entre le premier niveau 32 et un point situé légèrement avant l'extrémité du secondaire 23.

Le principe de fonctionnement de l'appareil s'analyse de la façon suivante : pour un courant d'excitation triangulaire Ie donné, les tensions Ur et Um délivrées respectivement par les secondaires 22 et 23 sont appliquées aux deux entrées de de l'amplificateur différentiel 6 qui délivre un signal analogique correspondant à la différence (Um-Ur). Ce signal de différence est sensiblement égal à zéro lorsque la face 31 de la cible est au niveau 32, il est négatif lorsque la face 31 est en dessous du niveau 32, et positif lorsqu'elle est au dessus. Ce signal de différence est appliqué aux deux comparateurs 7 et 8 qui eux, fonctionnent de façon logique. Chacun de ces comparateurs reçoit du générateur 9 une tension de réference correspondant par exemple à un seuil bas pour le comrateur 7 et à un seuil haut pour le comparateur 8. Dans certains cas on peut définir pour le seuil bas la valeur zéro, mais ce n'est pas obligatoire. On peut ainsi par exemple définir un seuil bas correspondant à une position à peine ouverte d'un clapet, et un seuil haut correspondant à une position très ouverte. Dans le schéma de la figure 1, on a représenté deux comparateurs 7 et 8 avec chacun un seuil de référence, on peut en prévoir plusieurs et comparer le signal de différence (Um-Ur) à autant de seuils. On pourrait également traiter le signal de différence de manière analogique. Mais dans le cas de la figure 1, les états de sortie des comparateurs 7 et 8 permettent de dire si l'on se trouve au seuil bas, entre les deux seuils, ou bien au seuil haut ou au-delà.

Les états de sortie des comparateurs logiques 7 et 8 sont examinés au cours des échantillonnages effectués à fréquence élevée par les circuits 10 et 11 pendant les impulsions d'horloge symbolisées sur la ligne c (figure 3). Lorsque plusieurs échantillonnages successifs ont donné le même résultat, les états de sortie correspondants des comparateurs 7 et 8 sont transmis aux circuits de sortie 12 et 13. Si un parasite intervient dans la série de mesures, les états de sortie ne sont pas transmis avant une nouvelle série de mesures cohérentes.

L'appareil selon l'invention peut fonctionner dans des conditions de température ne dépassant pas le point de Curie des matériaux magnétiques, c'est-à-dire jusqu'à 600°C environ. Le fil utilisé pour le bobinage est alors de préférence du fil de cuivre ou de nickel, isolé par une céramique. Le capteur présente l'avantage d'avoir une tension de référence sur place grâce au secondaire de référence 22. Cela permet de diminuer l'influence des variations de l'excitation, et d'éliminer pratiquement l'influence des paramètres locaux comme la température. En outre, on peut utiliser un capteur éloigné de plusieurs centaines de mètres du circuit électronique d'utilisation. La différence (Um-Ur) étant faite dans ce circuit et non dans le capteur, l'influence des parasites de ligne est minimisée par la nature même de la ligne de liaison à quatre fils dont un fil de masse. Un avantage de l'appareil selon l'invention est que cette ligne de liaison n'a pas besoin d'être blindée.

Cet appareil s'applique notamment au domaine nucléaire et à la chimie, dans les processus mettant en jeu des conditions de température élevée, ou de pression élevée, ou des conditions d'environnement corrosif impliquant des parois d'isolement épaisses.

R E V E N D I C A T I O N S

1. - Procédé de contrôle de la position d'une cible à l'intérieur d'une enveloppe à parois épaisses, caractérisé en ce
qu'on utilise comme capteur un transformateur à couplage variable asymétrique, à deux secondaires en phase ; et en ce que
l'on définit à distance du capteur et par voie électronique
la différence entre les signaux des deux secondaires.

2. - Procédé selon la revendication 1, caractérisé en ce qu'on
utilise comme signal d'excitation du capteur un courant triangulaire, et on procède aux mesures par échantillonnage en
fin de demi-période du courant d'excitation.

3. - Procédé selon la revendication 1, caractérisé en ce que
le signal analogique de différence entre les signaux des deux
secondaires est comparé à des valeurs de seuil dans des comparateurs dont l'état de sortie est représentatif de la position
de la cible.

4. - Procédé selon la revendication 2, caractérisé en ce
qu'on utilise une cible magnétique suffisamment longue pour
qu'une partie en soit toujours dans le capteur.

5. - Appareil de contrôle de la position d'une cible à l'intérieur d'une enveloppe à parois épaisses, caractérisé en ce
qu'il comporte : un capteur (5) constitué d'un transformateur
à couplage variable asymétrique, à deux secondaires en phase,
et un circuit électronique, séparés par une ligne (16) à
quatre fils, un fil de masse (24), un fil d'alimentation en
courant du primaire (21) du transformateur et deux fils de
transmission des signaux de sortie des deux secondaires
(22, 23).

6. - Appareil selon la revendication 5, caractérisé en ce
que le circuit électronique comprend un amplificateur différentiel (6) à haute impédance d'entrée, élaborant le signal
différence entre les signaux en provenance des deux secondaires (22, 23), un générateur (9) de tensions de seuil, et des comparateurs (7, 8) comparant le signal différence auxdites tensions de seuil.

7. - Appareil selon la revendication 6, caractérisé en ce que des circuits anti-rebonds (10, 11) sont prévus pour transmettre, après échantillonnage, l'état de sortie des comparateurs.

8. - Appareil selon la revendication 5, caractérisé en ce que pour l'alimentation du capteur (5) en courant, le circuit électronique comporte un oscillateur (1), une horloge (2) un convertisseur (3) de signaux carrés en signaux triangulaires, et un convertisseur (4) tension-intensité.

9. - Appareil selon la revendication 5, caractérisé en ce que le capteur (5) comporte un primaire (21), un secondaire de référence (22) et un secondaire de mesure (23), le primaire (21) et le secondaire de référence (22) étant bobinés l'un sur l'autre.

10. - Appareil selon la revendication 9, caractérisé en ce que le secondaire de mesure (23) est plus long que le primaire (21) et le secondaire de référence (22).

0128824

1/2

*Fig.1*

*Fig.2*

0128824

2/2

Fig.3

Fig.4

0128824

## Office européen des brevets

# RAPPORT DE RECHERCHE EUROPEENNE

EP  84 40 1157

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | EP-A-0 028 971  (SNECMA)<br>* Figures 1,2; abrégé *<br><br>--- | 1,5 | G 01 D    5/22 |
| A | FR-A-2 444 924  (SANDRETTO)<br>* Figures 1,3; page 3, ligne 27 - page 4, ligne 1 *<br><br>----- | 1,5 | |

|  |  |  | DOMAINES TECHNIQUES RECHERCHES (Int. Cl. ³) |
|---|---|---|---|
|  |  |  | G 01 D |

Le présent rapport de recherche a été établi pour toutes les revendications

| Lieu de la recherche | Date d'achèvement de la recherche | Examinateur |
|---|---|---|
| LA HAYE | 09-08-1984 | MIELKE W |